# FASCICULE DE BREVET EUROPEEN

(11) **EP 2 020 465 B1**
(45) Date de publication et mention de la délivrance du brevet: **08.12.2010**
(21) Numéro de dépôt: 08290509.2
(22) Date de dépôt: 03.06.2008
(51) Int. Cl.: E03F 5/16, B01D 21/24

(54) **Dispositif de py-pass pour séparateur à hydrocarbures destiné au traitement d'eaux de ruissellement**
Bypass-Vorrichtung für Kohlenwasserstoffseparator, der für die Aufbereitung von Oberflächenwasser bestimmt ist
Bypass device for a hydrocarbon separator designed for treating runoff water

(30) Priorité: 01.08.2007 FR 0705626
(43) Date de publication de la demande: 04.02.2009
(73) Titulaire: Societe Eudoise d'Environnement et de Separation, 76260 Etalondes (FR)
(72) Inventeur: Le Prince, Guy, 76260 EU (FR)
(74) Mandataire: Jaunez, Xavier

(56) Documents cités:
- NL-C1- 1 015 934
- US-A1- 2005 103 698
- US-A1- 2005 184 007

## Description

### DOMAINE DE L'INVENTION

La présente invention est du domaine du traitement des eaux pluviales ou industrielles, et a plus particulièrement pour objet un perfectionnement aux séparateurs à hydrocarbures destinés au traitement d'eaux de ruissellement.

### ARRIERE-PLAN DE L'INVENTION

Sur toutes les zones de circulation de véhicules (parkings, voiries, aires de lavage, aires de dépotage, stations service, etc...), les eaux de ruissellement apparaissant en cas de pluies ou de nettoyage renferment une quantité plus ou moins importante d'hydrocarbures, de boues et de diverses matières solides en suspension qu'il est nécessaire d'éliminer avant le rejet en milieu naturel ou en station d'épuration.

On a déjà proposé de nombreux séparateurs à hydrocarbures qui sont du type à compartiment débourbeur et compartiment séparateur, ces deux compartiments étant montés en série, de façon que les eaux de ruissellement ayant pénétré dans le séparateur en ressortent dans un état débourbé, et débarrassées des hydrocarbures vers une canalisation de sortie.

On pourra se référer, au titre de l'arrière-plan technologique, aux documents FR-A-2 654 950, de FR-A-2 577 917, FR-A- 2 754 871, et FR-A-2 836 471.

En cas d'orages ou de fortes pluies, la situation se complique dans la mesure où des volumes d'eaux de ruissellement avec des débits très importants sont introduits dans le séparateur, lesquels débits d'eaux ne peuvent la plupart du temps être intégralement débarrassés des hydrocarbures qu'ils contiennent. Pour faire face à cette difficulté, on a développé il y a une vingtaine d'années des dispositifs de déviation de flux intégrés aux séparateurs à hydrocarbures, en général appelés dispositifs de by-pass ou déversoirs d'orage. La fonction d'un tel dispositif de by-pass est de recueillir les eaux lors d'une augmentation de débit, ainsi que les eaux n'accédant plus dans le compartiment séparateur lorsque celui-ci est saturé, et de renvoyer directement vers la sortie le flux qui est supérieur à la capacité de traitement du séparateur. En effet, les compartiments séparateurs sont classiquement pourvus d'un système d'obturation automatique, en général à flotteur, qui, en cas de saturation et/ou d'accumulation d'hydrocarbures, vient fermer progressivement la sortie du compartiment séparateur, l'intégralité des eaux en entrée de l'appareil étant alors évacuée directement par le dispositif de by-pass. De façon plus générale, on considère que, sur les zones où la pollution est réputée faible (zones de roulement, parkings, zones de stationnement imperméabilisées), les hydrocarbures sont drainés par les premières eaux d'un élément pluvial. Si la pluviométrie devient très importante, on peut considérer que les surfaces concernées sont déjà débarrassées de la majorité des hydrocarbures légers, et tolérer que le flux plus important traverse le dispositif de by-pass ou déversoir d'orage sans être détourné dans le séparateur proprement dit. Pour l'arrière-plan technologique relatif aux dispositifs de by-pass, on pourra se référer aux documents FR-A-2 642 745, NL-C-1 015 934 ET US-A-2005/184 007.

Plus récemment, on a proposé un dispositif de by-pass pour séparateurs à hydrocarbures, comportant au moins une canalisation de contournement disposée à l'extérieur du caisson principal du séparateur et reliant des boîtes de connexion d'entrée et de sortie diamétralement opposées, la ou les canalisations de contournement étant conformées pour passer autour d'une cheminée centrale du caisson du séparateur prévue pour l'accès et la surveillance à l'intérieur dudit caisson lorsque celui-ci est enterré.

Une telle approche est illustrée dans le document FR-A-2 881 737.

La structure décrite dans ce document est intéressante dans la mesure où il est proposé une réalisation modulaire du dispositif de by-pass, avec un système en deux demi-anneaux reliant des boîtiers de connexion d'entrée et de sortie diamétralement opposés, lesquels boîtiers présentent inférieurement un manchon cylindrique de raccordement qui est inséré verticalement dans des orifices respectifs d'entrée et de sortie du caisson principal du séparateur, les deux demi-anneaux passant autour de la cheminée centrale dudit caisson. Il devient dès lors possible de construire différents caissons de traitement avec les mêmes éléments, ou de réaliser un séparateur équipé d'une ou deux canalisations de contournement, ou en variante d'aucune canalisation de contournement, sans avoir à changer les boîtiers d'entrée et de sortie et sans avoir à modifier l'agencement intérieur du caisson principal ou la forme de celui-ci.

Cependant, une telle structure qui était certes séduisante en théorie s'avère présenter de graves inconvénients dans la pratique. En effet, le principe même d'une réalisation en demi-anneaux raccordant des boîtiers de connexion d'entrée et de sortie implique la présence de coudes particulièrement marqués à l'entrée et à la sortie du dispositif de by-pass, sans parler également du trajet incurvé inhérent à la géométrie demi-circulaire des canalisations de contournement. En outre, les canalisations de contournement de forme demi-circulaire présentent un diamètre notablement inférieur à celui de la canalisation d'entrée des eaux de ruissellement à traiter, ce qui multiplie les risques d'obturation en cas de gros obstacles, ou impose un dégrillage des effluents en amont du séparateur, ce qui génère des coûts supplémentaires, sans parler des pertes de charge importantes inhérentes au trajet emprunté par les eaux de ruissellement s'écoulant avec de gros débits en cas d'orages. En plus de ces inconvénients de fonctionnement, une telle structure implique la présence de six à huit garnitures d'étanchéité, ce qui multiplie les risques de fuite, et oblige également à prévoir un nombre important de regards en surface pour permettre l'inspection du système, avec au minimum un regard associé à chaque boîtier de connexion d'entrée et de sortie. Enfin, la complexité de la structure a un effet inévitable sur le coût de production des pièces, même si celles-ci sont réalisées en matière plastique.

Enfin, le document US-A-2005/103 698 décrit un dispositif de by-pass pour séparateur à hydrocarbures destiné au traitement d'eaux de ruissellement du type à caisson principal comportant un compartiment débourbeur et compartiment séparateur de part et d'autre d'un trou d'homme, conformément au préambule de la revendication 1.

Dans ce document, le caisson unitaire est enterré à distance du caisson principal, et il est raccordé à celui-ci par deux tubulures horizontales débouchant sensiblement à mi-hauteur du caisson principal, ces tubulures présentant en outre un coude terminal dans ledit caisson principal.

Un tel agencement présente de nombreux inconvénients :
- il est en effet nécessaire de prévoir deux fosses, l'une pour enterrer le caisson principal et l'autre pour enterrer le caisson unitaire du dispositif de by-pass, et deux dalles de répartition au-dessus de chacun des caissons, d'où une complication du terrassement et de la maçonnerie ;
- le raccordement latéral par des tubulures, outre leur défaut de pente, implique des pertes de charge importantes, et surtout pénalise le volume utile du caisson principal (le niveau d'eau dans celui-ci étant limité au niveau du raccordement) ; et
- les coudes d'entrée présentés par les tubulures de raccordement, outre les pertes de charge, induisent un risque considérable d'obturation par des obstacles tels que branchages ou feuilles.

L'homme de métier pourrait penser rapprocher le caisson unitaire du caisson principal pour éviter le premier inconvénient, mais ceci ne permettrait pas de supprimer les autres inconvénients relatifs à l'écoulement des eaux.

### OBJET DE L'INVENTION

La présente invention a pour objet de proposer un dispositif de by-pass pour séparateur à hydrocarbures ne présentant pas les inconvénients et/ou limitations des dispositifs précités de l'art antérieur, grâce à une structure dont la simplicité favorise à la fois la mise en place et l'inspection en service, mais aussi la fabrication pour un coût modique.

L'invention a également pour objet de proposer un dispositif de by-pass dont la structure facilite l'implantation, et optimise le volume utile du caisson principal du séparateur, tout en limitant les pertes de charge et les risques d'obturation.

### DEFINITION GENERALE DE L'INVENTION

Le problème technique précité est résolu conformément à l'invention grâce à un dispositif de by-pass du type précité, conformément à la partie caractérisante de la revendication 1.

Ainsi, la structure en caisson tridimensionnel unitaire du dispositif de by-pass permet de réaliser une pièce unique qu'il suffit de mettre en place sur le caisson principal du séparateur, et l'alignement de l'entrée et de la sortie du dispositif de by-pass permet d'avoir, en cas très forts débits d'eaux, un écoulement rectiligne exempt de pertes de charge et sans risques d'obturation par des obstacles emportés par les flux d'eaux de ruissellement. Cet écoulement direct dans le caisson tridimensionnel unitaire lui-même représente ainsi un progrès considérable par rapport à la géométrie complexe rappelée ci-dessus utilisant des canalisations de contournement en arcs de cercle raccordées à des boîtiers de connexion d'entrée et de sortie. De plus, l'implantation est facilitée, et le volume utile du caisson principal est optimisé, et ce avec le minimum de pertes de charge et de risques d'obturation.

Avantageusement, le caisson unitaire est de forme générale parallélépipédique, et, lorsque ledit caisson unitaire est monté sur caisson principal du séparateur, les cloisons latérales en vis-à-vis sont essentiellement verticales, et les cloisons inférieure et supérieure sont essentiellement horizontales.

Il est alors particulièrement intéressant de prévoir que la cloison inférieure du caisson unitaire présente un talus transversal formant surverse, les deux orifices de ladite cloison inférieure étant situés de part et d'autre dudit talus transversal. Un tel talus transversal formant surverse est très intéressant pour limiter le débit entrant dans le séparateur par ajutage.

De préférence alors, le talus transversal formant surverse est agencé de façon que la section de passage du caisson unitaire au niveau dudit talus transversal soit au moins égale à la section de passage de l'entrée et de la sortie définies au niveau des cloisons latérales dudit caisson unitaire. Ceci permet à la fois d'éviter des pertes de charge défavorables et d'écarter des risques inutiles d'obturation en cas de passage d'obstacles transportés par les eaux de ruissellement à gros débits.

Avantageusement encore, le talus transversal formant surverse est disposé à l'aplomb du trou d'homme ménagé dans la cloison supérieure du caisson unitaire. En effet, cette position du trou d'homme permet une inspection rapide, et une éventuelle intervention directe en cas d'obstruction au niveau de la partie sensible du dispositif de by-pass.

Il est également intéressant de prévoir que le talus transversal formant surverse partage la cloison inférieure du caisson unitaire en deux parties qui sont agencées à un niveau différent, avec un niveau plus élevé du côté de l'entrée que du côté de la sortie dudit caisson unitaire. Un tel agencement a pour effet de favoriser l'écoulement en créant une pente descendante de l'entrée vers la sortie qui compense les pertes de charge.

On pourra alors prévoir que la partie entrée de la cloison inférieure du caisson unitaire est équipée d'un dégrilleur surmontant l'orifice associé de ladite cloison inférieure. En particulier, le dégrilleur prend directement appui sur le talus transversal formant surverse. Grâce à un tel dégrilleur les éventuels objets solides sont retenus et ne pénètrent pas dans le compartiment débourbeur du séparateur, et ces objets sont en plus repoussés par le flux des eaux rentrantes jusqu'à franchir grâce à l'effet de chasse le talus transversal formant surverse et gagner ensuite la sortie du dispositif de by-pass.

Il est par ailleurs intéressant de prévoir que l'entrée et la sortie dudit dispositif de by-pass sont formées par désoperculage des cloisons latérales associées. Ceci permet de découper les orifices d'entrée et de sortie en choisissant un diamètre compatible avec le débit maximum toléré. On pourra procéder de même pour les deux orifices ménagés dans la cloison inférieure du caisson unitaire, ou en variante équiper l'orifice d'entrée d'une canne tubulaire plongeante.

Avantageusement, l'entrée et la sortie sont en outre équipées d'une garniture d'étanchéité et d'une butée axiale agencée pour limiter l'enfoncement d'une canalisation extérieure respective de raccordement.

Par ailleurs, pour faciliter encore l'implantation en réduisant le terrassement et la maçonnerie, il est intéressant de prévoir que, lorsque le caisson unitaire est monté sur le caisson principal, les trous d'homme desdits caissons sont juxtaposés et dimensionnés pour permettre l'intégration des deux accès dans un regard visitable unique.

De préférence alors, les deux trous d'homme sont accolés par deux parois verticales de contact et ont des profils complémentaires formant un contour régulier, en particulier un contour circulaire, rectangulaire ou carré.

Avantageusement dans ce cas, le contour régulier ainsi formé est consolidé par un boulonnage des deux parois verticales de contact entre elles, ou en variante par un sanglage périphérique.

De préférence encore, le caisson unitaire présente latéralement un nervurage de rigidification qui est agencé selon des directions verticales lorsque ledit caisson unitaire est monté sur le caisson principal.

Avantageusement enfin, le caisson unitaire est réalisé en matière plastique, notamment en polyéthylène, de préférence par rotomoulage.

D'autres caractéristiques et avantages de l'invention apparaîtront plus clairement à la lumière de la description qui va suivre et des dessins annexés, illustrant un mode de réalisation particulier.

### BREVE DESCRIPTION DES DESSINS

Il sera fait référence aux figures des dessins annexés, où :
- les figures 1 et 2 illustrent en perspective un séparateur à hydrocarbures équipé d'un dispositif de by-pass conforme à l'invention, selon une première variante, respectivement en vue éclatée et en vue montée dudit dispositif ;

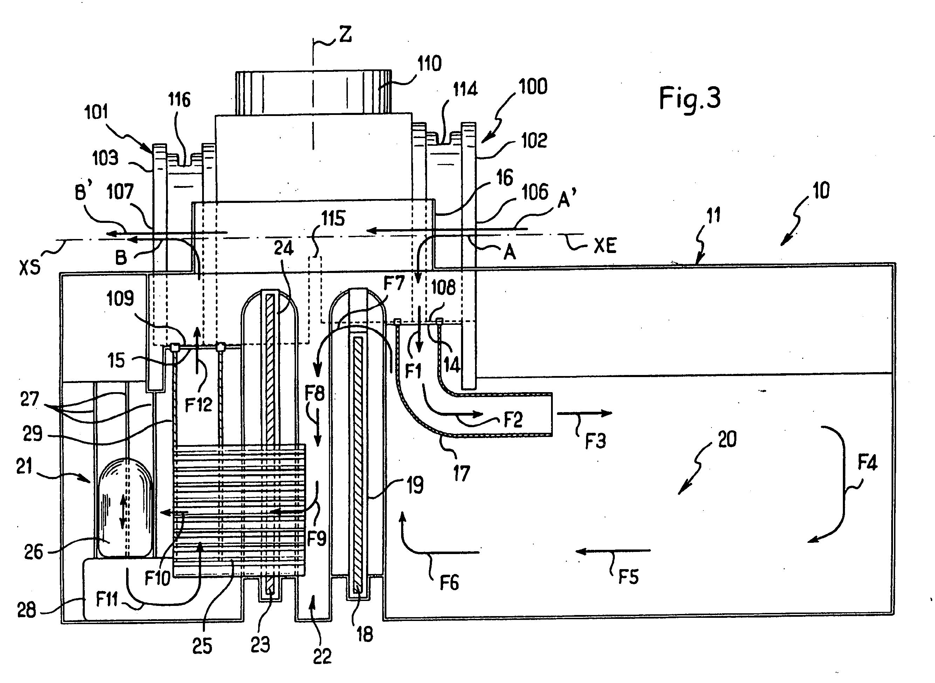

- la figure 3 est une vue en coupe du séparateur précité au niveau de ses compartiments débourbeur et séparateur, avec des flèches illustrant d'une part les flux d'écoulement en cas de débits inférieurs à une limite prédéterminée, pour lesquels le dispositif de by-pass n'intervient pas, et d'autre part les flux d'écoulement pour les écoulements dépassant la limite précitée en cas de fortes pluies, pour lesquels le dispositif de by-pass entre automatiquement en fonction en permettant un écoulement direct et sensiblement rectiligne des eaux qui ne pénètrent pas dans le compartiment débourbeur du séparateur ;
- la figure 4 illustre en perspective le dispositif de by-pass seul, dont la face latérale visible est ici représentée dans son état antérieur au désoperculage destiné à définir l'orifice d'entrée ;
- la figure 5 est une vue regroupant une demi-vue latérale en partie haute et une demi-coupe en partie basse afin de mieux distinguer l'agencement des orifices de la cloison inférieure de part et d'autre d'un talus transversal formant surverse, ainsi que divers aménagements avantageux ;
- la figure 6 est une vue de dessus du dispositif, illustrant l'accès général et central par le trou d'homme supérieur à l'aplomb duquel est prévu le talus transversal formant surverse ;
- les figures 7 et 8, analogues aux figures 1 et 2, illustrent une deuxième variante dans laquelle les trous d'homme des deux caissons ont des profils complémentaires pour permettre l'intégration des deux accès dans un regard visitable unique ;
- les figures 9 et 10 sont des vues en perspective et de côté du dispositif de by-pass seul, selon cette deuxième variante, et
- la figure 11 est une coupe selon XI-XI de la figure 10.

### DESCRIPTION DETAILLEE D'UN MODE DE REALISATION PREFERE

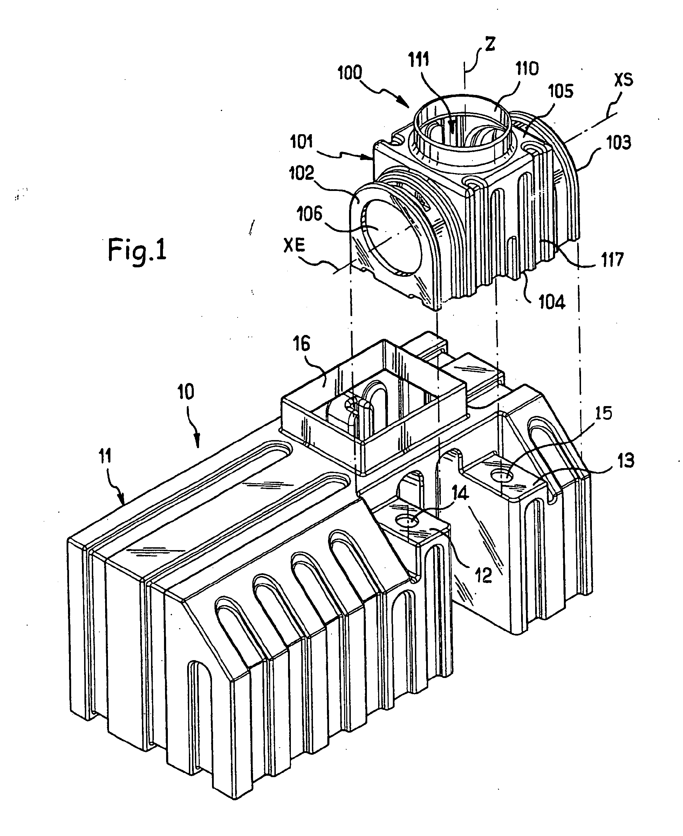

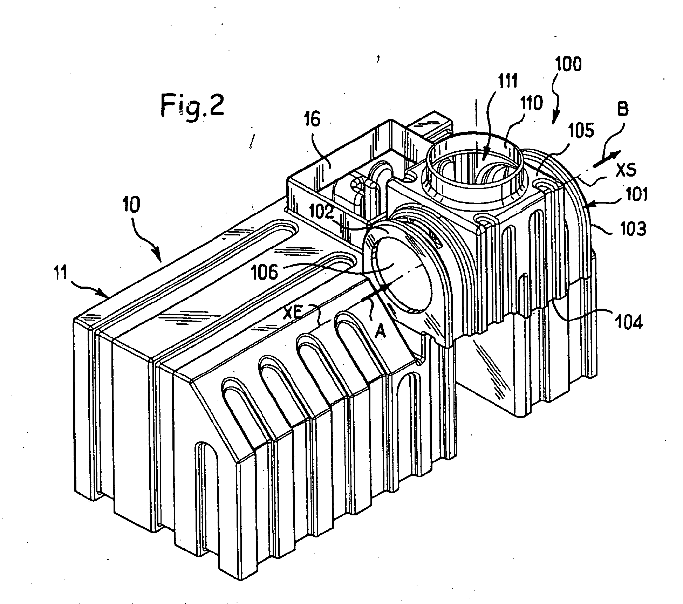

Sur les figures 1 et 2, on distingue un séparateur à hydrocarbures, destiné au traitement d'eaux de ruissellement, comportant la référence générale 10. Le séparateur 10 comporte un caisson principal 11 qui est réalisé ici de façon monobloc, lequel caisson comporte un compartiment débourbeur et un compartiment séparateur de part et d'autre d'un trou d'homme 16. Les compartiments précités sont mieux visibles sur la coupe de la figure 3 qui fera l'objet d'une description plus détaillée ci-après.

Le caisson principal 11 présente extérieurement deux plans d'appui essentiellement horizontaux 12, 13, présentant des orifices respectifs, 14, 15 qui constituent respectivement l'entrée du compartiment débourbeur et la sortie du compartiment séparateur. En l'espèce, les plans d'appui 12, 13 sont à des niveaux différents, avec un niveau plus élevé pour l'entrée que pour la sortie, ceci pour organiser une pente naturelle associée au dispositif de by-pass 100 comme cela sera expliqué par la suite.

Le dispositif de by-pass 100 conforme à l'invention est essentiellement constitué par un caisson tridimensionnel unitaire 101 délimitant un espace intérieur de passage 111 et destiné à être monté directement sur le caisson principal 11 du séparateur. La figure 1 illustre le dispositif de by-pass 100 avant son montage, et la figure 2 une fois son montage réalisé, avec utilisation de moyens de type boulonnage ou analogues non représentés ici, par exemple au niveau des plans d'appui 12, 13 du caisson principal 11.

Le caisson unitaire 101 comporte deux cloisons latérales 102, 103 en vis-à-vis, définissant une entrée 106 et une sortie 107 dudit dispositif de by-pass qui sont sensiblement alignées l'une par rapport à l'autre et qui constituent l'entrée et la sortie du séparateur lorsque le caisson unitaire 101 est monté sur le caisson principal 11. Le caisson unitaire 101 comporte en outre une cloison inférieure 104 qui, comme cela sera décrit plus en détail par la suite, présente deux orifices qui sont superposés de façon étanche respectivement à l'orifice d'entrée 14 du compartiment débourbeur du caisson principal 11 et à l'orifice de sortie 15 du compartiment séparateur du caisson principal 11 lorsque ledit caisson unitaire 101 est monté sur ledit caisson principal 11. La superposition des orifices concernés réalise ainsi un raccordement direct du caisson unitaire 101 au caisson principal 11. Il est enfin prévu une cloison supérieure 105 présentant un trou d'homme 110 autorisant un accès direct à la totalité de l'espace intérieur de passage 111.

Le caisson unitaire 101 est monté en totalité à l'extérieur et au voisinage direct du caisson principal 11 du séparateur. Dans la pratique, une fois enterré le séparateur équipé de son dispositif de by-pass, et réalisé une double dalle de répartition unique au-dessus des deux caissons, il sera prévu deux rehausses (non représentées ici) associées respectivement au trou d'homme 16 du caisson principal 11 et au trou d'homme 110 du dispositif de by-pass 100, ce qui implique la présence d'un unique double regard ou de deux regards juxtaposés en surface.

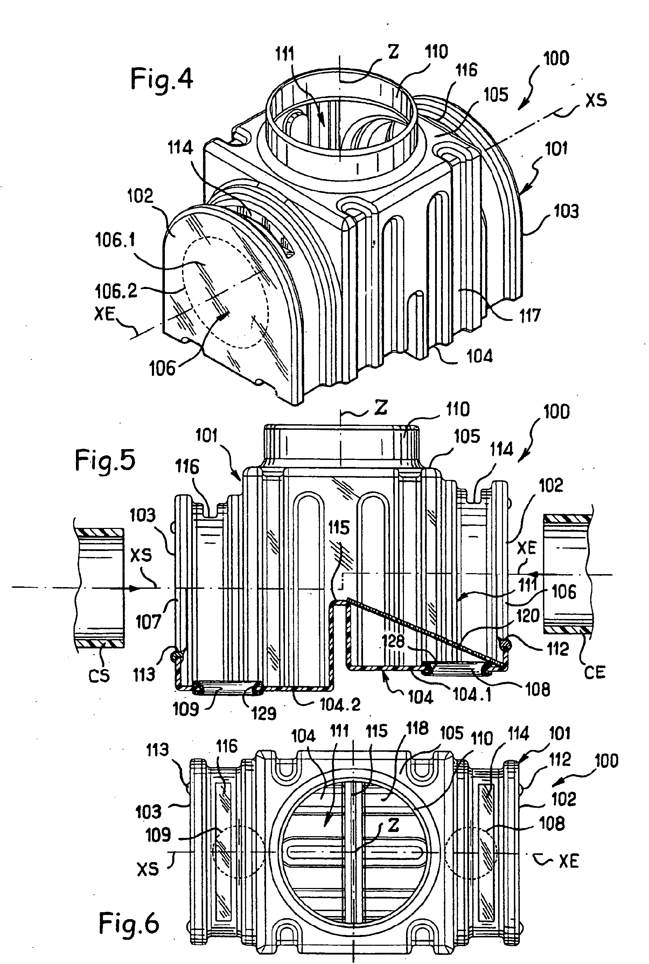

Dans la pratique, dans la situation de la figure 2 qui correspond au dispositif de by-pass monté sur le caisson principal du séparateur, des canalisations extérieures de raccordement (non représentées ici) seront associées à l'entrée et à la sortie du dispositif de by-pass 100 selon un axe XE à l'entrée, et XS à la sortie, les écoulements d'entrée et de sortie étant schématisés ici par des flèches A et B. De telles canalisations extérieures de raccordement ont été représentées schématiquement et en partie sur la figure 5 qui sera décrite plus loin.

Pour les écoulements à faibles débits d'eaux de ruissellement, on aura compris que les débits d'eaux concernés arrivant selon la flèche A à l'entrée du dispositif de by-pass 100 pénètrent dans le compartiment débourbeur du caisson principal 11 pour en ressortir par le compartiment séparateur dudit caisson principal 11, et s'échapper finalement par la sortie du dispositif de by-pass 100 conformément à la flèche B. En cas de très gros débits, correspondant à une situation de fortes pluies ou d'orages violents, la majeure partie des écoulements, en général 80 % du débit maximum admissible, passe directement de l'entrée à la sortie du dispositif de by-pass 100 conformément aux flèches A' et B', selon un écoulement en trace directe essentiellement rectiligne.

Conformément à la structure présentement illustrée, le caisson unitaire 101 est de forme générale parallélépipédique, et, lorsque ledit caisson unitaire est monté sur le caisson principal 11 du séparateur, les cloisons latérales en vis-à-vis 102, 103 sont essentiellement verticales, et les cloisons supérieure et inférieure 104, 105 sont essentiellement horizontales. Un tel caisson unitaire pourra être réalisé dans différents matériaux, mais on peut relever une préférence pour une réalisation en matière plastique, notamment en polyéthylène, en utilisant une technique d'injection-soufflage ou mieux de rotomoulage. On observera également que le caisson unitaire 101 présente latéralement un nervurage de rigidification 117 qui est agencé selon des directions verticales lorsque ledit caisson unitaire est monté sur le caisson principal 11.

On va maintenant décrire plus en détail la structure du caisson unitaire tridimensionnel 101 du dispositif de by-pass 100 en référence aux figures 4 à 6.

Comme cela est mieux visible sur la figure 5 dont la partie inférieure est une demi-coupe par un plan vertical central, la cloison inférieure 104 du caisson unitaire 101 présente un talus transversal 115 formant surverse. On distingue sur cette figure deux orifices 108 et 109 de la cloison inférieure 104, lesquels orifices sont destinés à être superposés de manière étanche, respectivement à l'orifice d'entrée 14 du compartiment débourbeur et à l'orifice de sortie 15 du compartiment séparateur ménagés sur le caisson principal 11 lorsque ledit caisson unitaire est raccordé audit caisson principal. Les deux orifices 108, 109 précités de la cloison inférieure 104 sont alors situés de part et d'autre du talus transversal 115 formant surverse.

De préférence, le talus transversal formant surverse 115 est agencé de façon que la section de passage du caisson unitaire 101 au niveau dudit talus transversal soit au moins égale à la section de passage de l'entrée et de la sortie 106, 107 définies au niveau des cloisons latérales 102, 103 dudit caisson unitaire. Ceci permet d'éviter des pertes de charge sensibles au niveau du franchissement du talus transversal 115, sans nuire à la fonction de surverse.

Comme cela est mieux visible sur les figures 5 et 6, le talus transversal formant surverse 115 est disposé à l'aplomb du trou d'homme 110 ménagé dans la cloison supérieure 105 du caisson unitaire 101. On dispose ainsi d'un accès direct à la partie sensible du dispositif de by-pass, ce qui est extrêmement avantageux. Par ailleurs, comme cela est mieux visible sur la figure 5, le talus transversal formant surverse 115 partage la cloison inférieure 104 du caisson unitaire 101 en deux parties notées 104.1 et 104.2, qui sont en l'espèce agencées à un niveau différent, avec un niveau plus élevé du coté de l'entrée 106 que du côté de la sortie 107 dudit caisson unitaire. Un tel décalage de niveau permet de créer un effet de pente, comme cela est en général prévu dans les dispositifs de by-pass, afin de compenser les pertes de charge.

On a également représenté sur la figure 5 un dégrilleur 120 agencé au niveau de l'entrée du dispositif de by-pass 100. Le dégrilleur 120 sera en général constitué par un cadre équipé de barres parallèles dont l'écartement respectif correspond au dimensionnement des obstacles solides à retenir afin d'en barrer l'accès au compartiment débourbeur du séparateur. Ainsi, la partie côté entrée 104.1 de la cloison inférieure 104 est équipée du dégrilleur 120 qui surmonte l'orifice associé 108, et le dégrilleur 120 est ici agencé, comme cela est visible sur la figure 5, avec un appui direct sur le talus transversal formant surverse 115. Un tel agencement permet d'avoir un effet de chasse générant un entraînement naturel des obstacles qui sont retenus sur le dégrilleur 120 par le flux rentrant afin d'en faciliter le franchissement du talus transversal formant surverse 115.

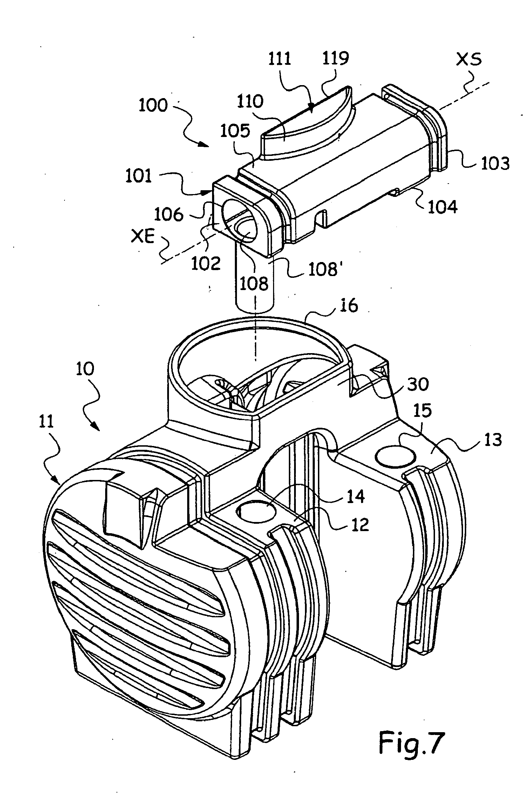

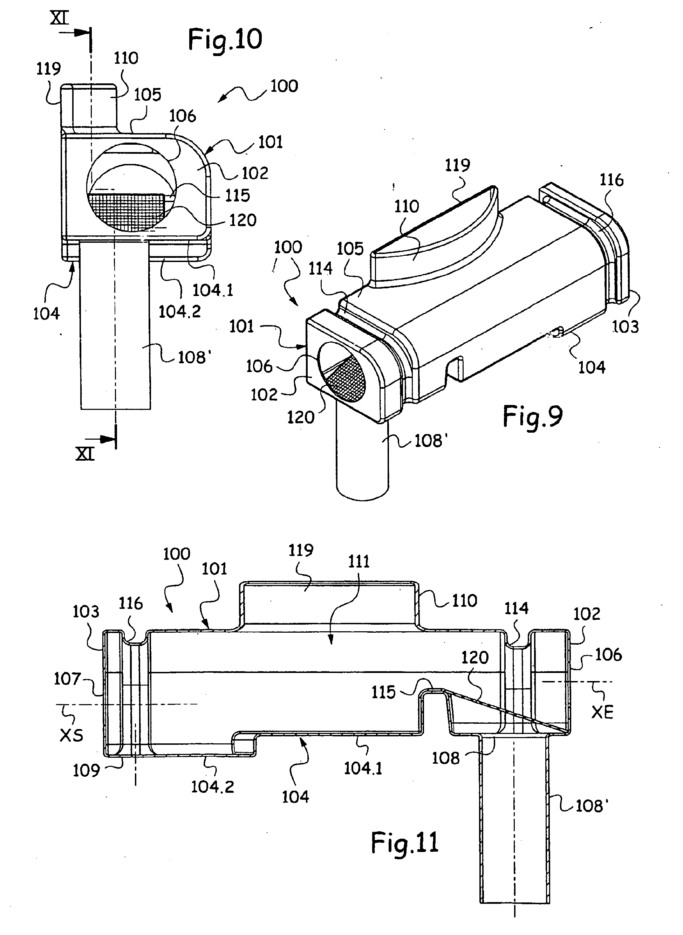

Il est par ailleurs intéressant de prévoir que l'entrée et la sortie 106, 107 du dispositif de by-pass 100 sont formées par désoperculage des cloisons latérales associées 102, 103. Un tel désoperculage est illustré pour l'une des cloisons latérales sur la figure 4. On distingue en effet la cloison latérale 102 qui correspond à l'entrée, présentant une ligne en pointillés 106.2 définissant le contour circulaire d'un opercule 106.1 dont l'enlèvement définit l'orifice d'entrée 106. On procèdera naturellement de même pour la cloison latérale opposée 103, afin de définir l'orifice de sortie 107. Une fois les opercules découpés dans le caisson unitaire, l'entrée et la sortie 106, 107 sont équipées d'une garniture d'étanchéité 112, 113 mieux visibles sur la figure 5. On utilise de préférence des garnitures 112 et 113 à lèvre, afin d'assurer l'étanchéité avec les canalisations extérieures respectives de raccordement notées CE pour l'entrée et CS pour la sortie. On notera à ce titre la présence de saillies 114 et 116 venues de fabrication dans le caisson unitaire 101, avec ici une saillie 114 au niveau de l'entrée et une saillie 116 au niveau de la sortie, lesdites saillies constituant des butées axiales permettant de limiter l'enfoncement des canalisations extérieures respectivement CE et CS. On est ainsi assuré, lors de la mise en place desdites canalisations par un personnel qui n'y apporterait pas le soin suffisant, d'éviter un enfoncement excessif qui amènerait l'extrémité libre des canalisations à un degré d'enfoncement nuisant aux écoulements associés aux orifices d'entrée 108 et de sortie 109 du dispositif de by-pass, voire aboutissant à une déviation de l'ensemble des flux entrants. Les orifices 108 et 109 précités sont quant à eux ici équipés d'une garniture d'étanchéité associée 128, 129 destinée à coopérer avec les garnitures (non représentées) associées aux orifices d'entrée et de sortie 14, 15 du caisson principal 11. Les garnitures superposées sont parfaitement appliquées l'une contre l'autre lors du boulonnage associé à la mise en place du dispositif de by-pass sur le caisson principal 11. On pourra aussi prévoir d'équiper l'un ou l'autre des orifices 108, 109 (de préférence l'orifice d'entrée 108) d'une canne tubulaire plongeante, droite ou coudée, qui est de préférence d'une pièce avec le caisson unitaire, comme cela a été prévu pour la variante des figures 7 à 10 qui sera décrite plus loin.

Le caisson unitaire 101 présente une rigidification satisfaisante grâce au nervurage latéral 117 précité, et aussi au nervurage 118 de la cloison inférieure 104 qui est visible par le trou d'homme 110 sur la figure 6.

On est ainsi parvenu à réaliser un caisson unitaire qui assure toutes les fonctions associées au passage des écoulements, en particulier la fonction de by-pass pour les très forts débits avec un écoulement direct essentiellement rectiligne, cette structure unitaire pouvant être aisément réalisée en matière plastique par injection-soufflage ou mieux encore par rotomoulage. L'ensemble unitaire réalisé par rotomoulage présente alors des cloisons complètes qu'il suffit de désoperculer pour réaliser les orifices souhaités, en particulier les orifices 106 et 107 d'entrée et de sortie et les orifices 108 et 109 de communication avec les compartiments débourbeur et séparateur du caisson principal, les diamètres de ces quatre orifices étant choisis en fonction du débit maximal souhaité pour le dispositif de by-pass.

On aura compris qu'une telle structure est extrêmement avantageuse tant sur le plan du fonctionnement que sur le plan de la fabrication.

On va maintenant brièvement décrire le fonctionnement du séparateur en se référant à la figure 3, étant entendu que l'agencement des compartiments débourbeur et séparateur ne fait pas partie de l'invention, et est conforme à la technique générale utilisée pour les séparateurs à hydrocarbures.

On distingue sur la figure 3 un compartiment 20 qui est le compartiment débourbeur, et un compartiment 21 qui est le compartiment séparateur. L'entrée des eaux de ruissellement se fait en régime normal par un coude d'entrée 17. Les trajectoires alors empruntées, après la flèche A au niveau de l'entrée du dispositif de by-pass 100, correspondent aux flèches F1, F2, F3, F4, F5, F6. Les particules lourdes et volumineuses du type cailloux ou agglomérés denses sont alors déposées au fond du compartiment 20 par simple décantation. Les eaux débourbées passent alors, selon la flèche F7, au dessus d'une paroi de séparation 18 pour arriver dans le compartiment séparateur 21. L'entrée de ce compartiment est constituée par un passage obligé 22 menant à l'entrée d'un filtre de coalescence 25 fixé dans une paroi de séparation 23. En l'espèce, on a prévu que les paroi 18 et 23 sont mises en place dans des glissières verticales constituées par des nervurages associés respectivement 19 et 24 prévus dans le caisson principal 11. Les cloisons 18 et 23 sont ainsi mises en place aisément par le trou d'homme associé 16 du caisson principal 11 à la façon des cadres d'une ruche d'abeilles. Après les écoulements correspondant aux flèches F8, F9, on arrive à un écoulement selon la flèche F10 en sortie du filtre de coalescence 25, puis selon la flèche F11 en remontant dans un tubage 29 jusqu'à l'écoulement de sortie selon la flèche F12 se raccordant à l'écoulement final de sortie correspondant à la flèche B. Le tubage 29 est monté sur un support 28 reposant sur le fond du compartiment séparateur 21.

On a également représenté ici un flotteur 26 constituant un obturateur automatique, ledit flotteur étant guidé par des barreaux verticaux 27 (ici quatre barreaux) et étant agencé pour flotter dans l'eau et couler dans les hydrocarbures (dont la densité est généralement comprise entre 0,85 et 0,95). Par suite, plus la couche d'hydrocarbures collectée augmente, plus le flotteur descend, jusqu'à ce qu'il obstrue la sortie du compartiment séparateur quand la couche a atteint son niveau maximal tolérable.

Ainsi, en utilisation normale correspondant à un débit inférieur à un seuil prédéterminé, par exemple 10 litres/seconde, les eaux de ruissellement à traiter empruntent le trajet allant de la flèche A à la flèche B en passant par les flèches F1 à F12, de façon à être débourbées et débarrassées de leurs hydrocarbures. En cas de fortes pluies ou d'orages violents, les débits dépassent le seuil prédéterminé, et dans ce cas la partie non traitée des eaux de ruissellement traverse simplement le dispositif de by-pass 100 conformément aux flèche A' et B' d'entrée et de sortie. On dispose alors d'un écoulement traversant sensiblement rectiligne, avec un minimum de pertes de charge et un minimum de risques d'obstruction, avec donc un fonctionnement optimal du dispositif de by-pass. A titre indicatif, la géométrie utilisée ici permet de supporter des débits allant jusqu'à 50 litres/seconde en débits d'eau entrants pour 10 litres/seconde en débits maximum traités.

On notera également que le montage du caisson unitaire 101 directement sur le caisson principal 11 permet d'optimiser le volume utile du caisson principal 11, contrairement aux agencements antérieurs à dispositif de by-pass intérieur au caisson principal du séparateur, ou à dispositif de by-pass agencé à côté du caisson principal du séparateur raccordé à celui-ci par des tubulures horizontales (comme c'est le cas dans le document US-A-2005/103 698 précité).

Bien entendu, en cas de dysfonctionnement imprévu du séparateur, par suite d'une obstruction en un point donné de celui-ci ou d'une saturation complète du niveau d'hydrocarbures, l'ensemble de l'écoulement entrant traverse le dispositif de by-pass en trace directe, comme en cas de fortes pluies.

On est ainsi parvenu à réaliser un dispositif de by-pass qui est à la fois de structure simple et de fonctionnement optimal, permettant d'éviter très largement les limitations et inconvénients des dispositifs de l'art antérieur précités.

On va maintenant décrire une deuxième variante qui est illustrée aux figures 7 à 10, en utilisant les mêmes références pour les composants identiques ou analogues.

La différence essentielle par rapport à la première variante réside dans l'agencement des trous d'homme des deux caissons.

On constate en effet que, lorsque le caisson unitaire 101 est monté sur le caisson principal 11, le trou d'homme 110 du caisson unitaire et le trou d'homme 16 du caisson principal 11 sont juxtaposés, en étant ici accolés par des parois verticales de contact respectivement 119 et 30, et dimensionnés pour permettre l'intégration des deux accès dans un regard visitable unique. Les deux trous d'homme 110, 16 ont (en section horizontale) des profils complémentaires formant un contour régulier qui est ici circulaire. On pourra en variante prévoir d'autres géométries de contour, par exemple rectangulaire ou carrée.

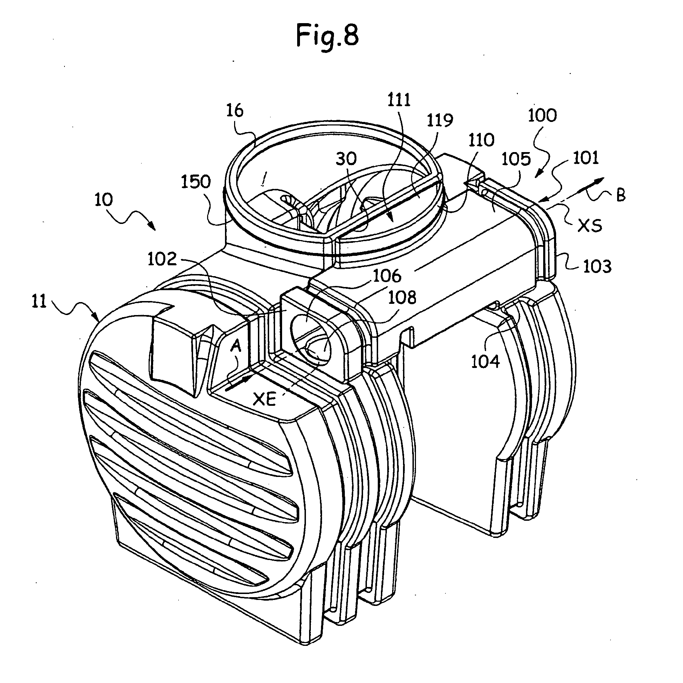

Le caisson unitaire 101 est parfaitement calé dans le logement de réception associé formé dans le caisson 11, avec un appui horizontal sur les faces 12, 13 et un appui vertical contre la face 30. Il sera cependant avantageux de prévoir une liaison consolidant le contour régulier ainsi formé, par exemple par boulonnage des deux parois verticales de contact 119,30 entre elles, ou encore, comme cela a été illustré sur la figure 8, par un sanglage périphérique 150.

Le dimensionnement de chaque trou d'homme 16, 110, en particulier ici celui du plus étroit 110, sera choisi pour préserver un accès direct et aisé à l'espace intérieur du caisson concerné.

On notera également ici la présence d'une canne tubulaire plongeante 108' associée à l'orifice d'entrée 108, laquelle canne pénètre par l'orifice 14 dans le caisson principal 11. En l'espèce, cette canne 108' est rectiligne, mais on pourra prévoir une forme coudée comme dans la première variante.

Un tel agencement est très avantageux dans la pratique, car il permet, en plus de la dalle unique de répartition, l'intégration des deux accès dans un regard visitable unique (dont le dimensionnement maximum est en général limité à un mètre de diamètre).

Pour le reste, on a les mêmes agencements et composants que pour la variante précédemment décrite, avec les mêmes avantages.

L'invention n'est pas limitée aux modes de réalisation qui viennent d'être décrits, mais englobe au contraire toute autre variante reprenant, avec des moyens équivalents, les caractéristiques essentielles énoncées plus haut.

## Revendications

1. Dispositif de by-pass pour séparateur à hydrocarbures destiné au traitement d'eaux de ruissellement du type à caisson principal (11) comportant un compartiment débourbeur et compartiment séparateur de part et d'autre d'un trou d'homme (16), ledit dispositif de by-pass étant constitué par un caisson tridimensionnel unitaire (101) délimitant un espace intérieur de passage (111) et destiné à être raccordé au caisson principal (11) du séparateur, le caisson unitaire (101) comportant deux cloisons latérales (102, 103) en vis-à-vis définissant une entrée (106) et une sortie (107) dudit dispositif de by-pass qui sont sensiblement alignées l'une par rapport à l'autre et une cloison supérieure (105) présentant un trou d'homme (110) autorisant un accès direct à l'espace intérieur de passage (111), **caractérisé en ce que** le caisson unitaire (101) est agencé pour être monté directement sur le caisson principal (11) du séparateur, l'entrée (106) et la sortie (107) constituent l'entrée et la sortie du séparateur lorsque le caisson unitaire (101) est monté sur le caisson principal (11), et ledit caisson unitaire comporte:
- une cloison inférieure (104) destinée à venir en appui direct sur le caisson principal, (11), ladite cloison inférieure présentant deux orifices (108, 109) qui sont superposés de façon étanche respectivement à un orifice d'entrée (14) du compartiment débourbeur (20) du caisson principal (11) et à un orifice de sortie (15) du compartiment séparateur (21) du caisson principal (11) lorsque ledit caisson unitaire (101) est monté sur ledit caisson principal (11), la superposition des orifices concernés (108, 14 ; 109, 15) réalisant un raccordement direct dudit caisson unitaire audit caisson principal.

2. Dispositif de by-pass selon la revendication 1, **caractérisé en ce que** le caisson unitaire (101) est de forme générale parallélépipédique, et **en ce que**, lorsque ledit caisson unitaire (101) est monté sur le caisson principal (11) du séparateur, les cloisons latérales en vis-à-vis (102, 103) sont essentiellement verticales, et les cloisons inférieure et supérieure (104, 105) sont essentiellement horizontales.

3. Dispositif de by-pass selon la revendication 2, **caractérisé en ce que** la cloison inférieure (104) du caisson unitaire (101) présente un talus transversal (115) formant surverse, les deux orifices (108, 109) de ladite cloison inférieure étant situés de part et d'autre dudit talus transversal.

4. Dispositif de by-pass selon la revendication 3, **caractérisé en ce que** le talus transversal formant surverse (115) est agencé de façon que la section de passage du caisson unitaire (101) au niveau dudit talus transversal soit au moins égale à la section de passage de l'entrée et de la sortie (106, 107) définies au niveau des cloisons latérales (102, 103) dudit caisson unitaire.

5. Dispositif de by-pass selon la revendication 3 ou la revendication 4, **caractérisé en ce que** le talus transversal formant surverse (115) est disposé à l'aplomb du trou d'homme (110) ménagé dans la cloison supérieure (105) du caisson unitaire (101).

6. Dispositif de by-pass selon l'une des revendications 3 à 5, **caractérisé en ce que** le talus transversal formant surverse (115) partage la cloison inférieure (104) du caisson unitaire (101) en deux parties (104.1, 104.2) qui sont agencées à un niveau différent, avec un niveau plus élevé du côté de l'entrée (106) que du côté de la sortie (107) dudit caisson unitaire.

7. Dispositif de by-pass selon la revendication 6, **caractérisé en ce que** la partie côté entrée (104.1) de la cloison inférieure (104) du caisson unitaire (101) est équipée d'un dégrilleur (120) surmontant l'orifice associé (108) de ladite cloison inférieure.

8. Dispositif de by-pass selon la revendication 7, **caractérisé en ce que** le dégrilleur (120) prend directement appui sur le talus transversal formant surverse (115).

9. Dispositif de by-pass selon l'une des revendications 1 à 8, **caractérisé en ce que** l'entrée et la sortie (106, 107) dudit dispositif de by-pass sont formées par désoperculage des cloisons latérales associées (102, 103).

10. Dispositif de by-pass selon la revendication 9, **caractérisé en ce que** l'entrée et la sortie (106, 107) sont en outre équipées d'une garniture d'étanchéité (112, 113) et d'une butée axial (114, 116) agencée pour limiter l'enfoncement d'une canalisation extérieure respective de raccordement (CE, CS).

11. Dispositif de by-pass selon l'une des revendications 1 à 10, **caractérisé en ce que** lorsque le caisson unitaire (101) est monté sur le caisson principal (11), les trous d'homme (110, 16) desdits caissons sont juxtaposés et dimensionnés pour permettre l'intégration des deux accès dans un regard visitable unique.

12. Dispositif selon la revendication 11, **caractérisé en ce que** les deux trous d'homme (110, 16) sont accolés par deux parois verticales de contact (119, 30) et ont des profils complémentaires formant un contour régulier, en particulier un contour circulaire, rectangulaire ou carré.

13. Dispositif selon la revendication 12, **caractérisé en ce que** le contour régulier ainsi formé est consolidé par un boulonnage des deux parois verticales de contact (119, 30) entre elles.

14. Dispositif selon la revendication 12, **caractérisé en ce que** le contour régulier ainsi formé est consolidé par un sanglage périphérique (150).

15. Dispositif de by-pass selon l'une des revendications 1 à 14, **caractérisé en ce que** le caisson unitaire (101) présente latéralement un nervurage de rigidification (117) qui est agencé selon des directions verticales lorsque ledit caisson unitaire est monté sur le caisson principal (11).

16. Dispositif de by-pass selon l'une des revendications 1 à 15, **caractérise en ce que** le caisson unitaire (101) est réalisé en matière plastique, notamment en polyéthylène, de préférence par rotomoulage.

## Claims

1. A by-pass device for a hydrocarbon separator intended for the processing of run-off water, of the main tank (11) type, including a washing compartment and a separating compartment on either side of a man-hole (16), with said by-pass device being composed of a three-dimension unit tank (101) delimiting an internal flow passage (111) and intended to be connected to the main tank (11) of the separator, said unit tank (101) including:
- two opposite side partition walls (102, 103) defining an inlet (106) and an outlet (107) of said by-pass device which are substantially aligned with each other and an upper partition wall (105) provided with a man-hole (110) enabling a direct access to the internal flow passage (111),
**characterized in that** the unit tank (101) is arranged so as to be directly mounted on the main tank (11) of the separator,
- the inlet (106) and the outlet (107) are the inlet and the outlet of the separator when the unit tank (101) is mounted on the main tank (11), and said unit tank includes:
- a lower partition wall (104) intended to be directly supported by the main tank (11), with said lower partition wall having two holes (108, 109) which are sealingly superimposed on an inlet (14) of the washing compartment (20) of the main tank (11) and on an outlet (15) of the separating compartment (21) of the main tank (11) respectively, when said unit tank (101) is mounted on said main tank (11), with the superimposition of the concerned holes (108, 14; 109, 15) providing a direct connection of said unit tank with said main tank.

2. A by-pass device according to claim 1, **characterized in that** the unit tank (101) has a general parallelepiped shape, and **in that**, when said unit tank (101) is mounted on the main tank (11) of the separator, the opposite side partition walls (102, 103) are substantially vertical, and the lower and upper partition walls (104, 105) are substantially horizontal.

3. A by-pass device according to claim 2, **characterized in that** the lower partition wall (104) of the unit tank (101) has an overflow-forming transversal cross slope (115), with both holes (108, 109) in said lower partition wall being located on either side of the transversal cross slope.

4. A by-pass device according to claim 3, **characterized in that** the overflow-forming transversal cross slope (115) is arranged so that the flow area of the unit tank (101) at said transversal cross slope is at least equal to the flow area of the inlet and the outlet (106, 107) defined at the side partition walls (102, 103) of said unit tank.

5. A by-pass device according to claim 3 or claim 4, **characterized in that** the overflow-forming transversal cross slope (115) is positioned straight under the man-hole (110) arranged in the upper partition wall (105) of the unit tank (101).

6. A by-pass device according to one of claims 3 to 5, **characterized in that** the overflow-forming transversal cross slope (115) divides the lower partition wall (104) of the unit tank (101) into two parts (104.1, 104.2) which are arranged at different levels, with a higher level on the inlet (106) side than on the outlet (107) side of said unit tank.

7. A by-pass according to claim 6, **characterized in that** the inlet side part (104.1) of the lower wall (104) of the unit tank (101) is provided with a screen (120) located above the associated hole (108) of said lower partition wall.

8. A by-pass device according to claim 7, **characterized in that** the screen (120) is directly supported by the overflow-forming transversal cross slope (115).

9. A by-pass device according to one of claims 1 to 8, **characterized in that** the inlet and the outlet (106, 107) of said by-pass device are formed by the uncapping of the associated side partition walls (102, 103).

10. A by-pass device according to claim 9, **characterized in that** the inlet and the outlet (106, 107) are further equipped with a gland packing (112, 113) and an axial stop (114, 116) arranged so as to limit the sinking of a respective external connection line (CE, CS).

11. A by-pass device according to one of claims 1 to 10, **characterized in that**, when the unit tank (101) is mounted on the main tank (11), the man-holes (110, 16) of said tanks are placed side by side, and their dimensions are so as to enable the integration of both accesses in a single walk-in inspection hole.

12. A device according to claim 11, **characterized in that** the two man-holes (110, 16) are joined by two contact vertical walls (119, 30) and have complementary profiles forming a regular outline, more particularly a circular, rectangular or square outline.

13. A device according to claim 12, **characterized in that** the regular outline thus formed is strengthened by the bolting together of both contact vertical walls (119, 30).

14. A device according to claim 12, **characterized in that** the regular outline thus formed is strengthened by a peripheral edging (150).

15. A by-pass device according to one of claims 1 to 14, **characterized in that** the unit tank (101) has a stiffening ribbing (117) which is arranged along vertical directions when said unit tank is mounted on the main tank (11).

16. A by-pass device according to one of claims 1 to 15, **characterized in that** the unit tank (101) is made of a plastic material, more particularly of polyethylene, preferably by rotational moulding.

## Patentansprüche

1. Bypass-Vorrichtung für einen Kohlenwasserstoff-Separator, der für die Aufbereitung von Oberflächenwasser bestimmt ist, wobei der Separator vom Typ mit einem Hauptbehälter (11) ist, der eine Entschlämmungskammer und eine Separatorkammer zu beiden Seiten eines Mannloches (16) umfasst, wobei die genannte Bypass-Vorrichtung aus einem dreidimensionalen unitären Behälter (101) gebildet ist, der einen inneren Durchgangsraum (111) begrenzt und dazu bestimmt ist, mit dem Hauptbehälter (11) des Separators verbunden zu werden, wobei der unitäre Behälter (101) zwei einander gegenüberliegende Seitenwände (102, 103) umfasst, die einen Eingang (106) und einen Ausgang (107) der genannten Bypass-Vorrichtung definieren, die im Wesentlichen zueinander ausgerichtet sind, sowie eine obere Wand (105), die ein Mannloch (110) aufweist, das einen direkten Zugang zum inneren Durchgangsraum (111) gestattet, **dadurch gekennzeichnet, dass** der unitäre Behälter (101) so ausgebildet ist, dass er direkt auf den Hauptbehälter (11) des Separators montiert wird, und der Eingang (106) und der Ausgang (107) den Eingang und den Ausgang des Separators bilden, wenn der unitäre Behälter (101) auf dem Hauptbehälter (11) montiert ist, und der genannte unitäre Behälter umfasst:
- eine untere Wand (104), die dazu bestimmt ist, direkt auf dem Hauptbehälter (11) zur Anlage zu kommen, wobei die genannte untere Wand zwei Öffnungen (108, 109) aufweist, die in dichter Weise auf eine Eintrittsöffnung (14) der Entschlämmungskammer (20) des Hauptbehälters (11) bzw. auf eine Austrittsöffnung (15) der Separatorkammer (21) des Hauptbehälters (11) aufgesetzt werden, wenn der genannte unitäre Behälter (101) auf dem genannten Hauptbehälter (11) montiert ist, wobei das Aufeinandersetzen der betreffenden Öffnungen (108, 14; 109, 15) eine direkte Verbindung des genannten unitären Behälters mit dem genannten Hauptbehälter herstellt.

2. Bypass-Vorrichtung nach Anspruch 1, **dadurch gekennzeichnet, dass** der unitäre Behälter (101) die allgemeine Form eines Parallelepipeds hat und dass, wenn der genannte unitäre Behälter (101) auf dem Hauptbehälter (11) des Separators montiert ist, die einander gegenüberliegenden Seitenwände (102, 103) im Wesentlichen vertikal und die untere und die obere Wand (104, 105) im Wesentlichen horizontal sind.

3. Bypass-Vorrichtung nach Anspruch 2, **dadurch gekennzeichnet, dass** die untere Wand (104) des unitären Behälters (101) eine einen Überlauf bildende, quer verlaufende Böschung (115) aufweist, wobei die beiden Öffnungen (108, 109) der genannten unteren Wand zu beiden Seiten der genannten quer verlaufenden Böschung liegen.

4. Bypass-Vorrichtung nach Anspruch 3, **dadurch gekennzeichnet, dass** die einen Überlauf bildende, quer verlaufende Böschung (115) derart ausgebildet ist, dass der Durchgangsquerschnitt des unitären Behälters (101) im Bereich der genannten quer verlaufenden Böschung mindestens gleich dem Durchgangsquerschnitt des Eingangs und des Ausgangs (106, 107) ist, die im Bereich der Seitenwände (102, 103) des genannten unitären Behälters definiert sind.

5. Bypass-Vorrichtung nach Anspruch 3 oder Anspruch 4, **dadurch gekennzeichnet, dass** die einen Überlauf bildende, quer verlaufende Böschung (115) senkrecht unter dem Mannloch (110) angeordnet ist, das in der oberen Wand (105) des unitären Behälters (101) ausgebildet ist.

6. Bypass-Vorrichtung nach einem der Ansprüche 3 bis 5, **dadurch gekennzeichnet, dass** die einen Überlauf bildende, quer verlaufende Böschung (115) die untere Wand (104) des unitären Behälters (101) in zwei Abschnitte (104.1, 104.2) unterteilt, die auf einem unterschiedlichen Niveau angeordnet sind, mit einem höheren Niveau auf der Seite des Eingangs (106) als auf der Seite des Ausgangs (107) des genannten unitären Behälters.

7. Bypass-Vorrichtung nach Anspruch 6, **dadurch gekennzeichnet, dass** der Eingangsseitenabschnitt (104.1) der unteren Wand (104) des unitären Behälters (101) mit einem Rechenreiniger (120) ausgestattet ist, der über der dazugehörigen Öffnung (108) der genannten unteren Wand angeordnet ist.

8. Bypass-Vorrichtung nach Anspruch 7, **dadurch gekennzeichnet, dass** der Rechenreiniger (120) direkt an der den Überlauf bildenden, quer verlaufenden Böschung (115) anliegt.

9. Bypass-Vorrichtung nach einem der Ansprüche 1 bis 8, **dadurch gekennzeichnet, dass** der Eingang und der Ausgang (106, 107) der genannten Bypass-Vorrichtung dadurch ausgebildet werden, dass in den dazugehörigen Seitenwänden (102, 103) Abdeckungen ausgebildet und entfernt werden (frz.: désoperculage).

10. Bypass-Vorrichtung nach Anspruch 9, **dadurch gekennzeichnet, dass** der Eingang und der Ausgang (106, 107) ferner mit einer Dichtungspackung (112, 113) und mit einem axialen Anschlag (114, 116) ausgestattet sind, der so ausgebildet ist, dass er das Eindrücken einer jeweiligen äußeren Verbindungsleitung (CE, CS) begrenzt.

11. Bypass-Vorrichtung nach einem der Ansprüche 1 bis 10, **dadurch gekennzeichnet, dass**, wenn der unitäre Behälter (101) auf dem Hauptbehälter (11) montiert ist, die Mannlöcher (110, 16) der genannten Behälter nebeneinander angeordnet und derart dimensioniert sind, dass sie die Integration von zwei Zugängen zu einer einzigen begehbaren Einstiegsöffnung ermöglichen.

12. Vorrichtung nach Anspruch 11, **dadurch gekennzeichnet, dass** die zwei Mannlöcher (110, 16) durch zwei vertikale Kontaktwände (119, 30) verbunden sind und komplementäre Profile haben, die eine gleichmäßige Kontur bilden, insbesondere eine kreisförmige, rechteckige oder quadratische Kontur.

13. Vorrichtung nach Anspruch 12, **dadurch gekennzeichnet, dass** die so gebildete gleichmäßige Kontur durch eine gegenseitige Bolzenverbindung der beiden vertikalen Kontaktwände (119, 30) verstärkt wird.

14. Vorrichtung nach Anspruch 12, **dadurch gekennzeichnet, dass** die so gebildete gleichmäßige Kontur durch eine Umfangsvergurtung (150) verstärkt wird.

15. Bypass-Vorrichtung nach einem der Ansprüche 1 bis 14, **dadurch gekennzeichnet, dass** der unitäre Behälter (101) seitlich eine Versteifungsverrippung (117) aufweist, die in vertikalen Richtungen ausgebildet ist, wenn der genannte unitäre Behälter auf dem Hauptbehälter (11) montiert ist.

16. Bypass-Vorrichtung nach einem der Ansprüche 1 bis 15, **dadurch gekennzeichnet, dass** der unitäre Behälter (101) aus Kunststoff hergestellt ist, insbesondere aus Polyethylen, vorzugweise durch Rotationsformen.
